**Europäisches Patentamt**

**European Patent Office**

**Office européen des brevets**

(11) Publication number: **0 104 820**
**B1**

(12) **EUROPEAN PATENT SPECIFICATION**

(45) Date of publication of patent specification: **13.08.86**    (51) Int. Cl.⁴: **G 02 B 6/38**

(21) Application number: **83305253.3**

(22) Date of filing: **08.09.83**

(54) **Optical fiber connector.**

(30) Priority: **10.09.82 US 416639**

(43) Date of publication of application:
**04.04.84 Bulletin 84/14**

(45) Publication of the grant of the patent:
**13.08.86 Bulletin 86/33**

(84) Designated Contracting States:
**BE CH DE FR GB IT LI LU NL SE**

(56) References cited:
**DE-A-2 826 717**
**DE-A-2 844 744**
**DE-B-2 723 440**
**GB-A-2 005 863**
**US-A-4 099 832**

(73) Proprietor: **G & H Technology, Inc.**
**1649 17th Street**
**Santa Monica, California 90404 (US)**

(72) Inventor: **Balyasny, Marik**
**7358 Ruffner Avenue**
**Van Nuys California 91406 (US)**
Inventor: **Parker, Douglas A**
**25203 Pennsylvania Avenue**
**Lomita California 90717 (US)**

(74) Representative: **Warden, John Christopher et al**
**R.G.C. Jenkins & Co. 12-15, Fetter Lane**
**London EC4A 1PL (GB)**

Courier Press, Leamington Spa, England.

## Description

The present invention relates broadly to an optical fiber connector and, more particularly, to an improved alignment bushing for use therewith.

Optical fibers are relatively small glass or plastic fibers (e.g., several thousandths of an inch in diameter) which are widely used for the transmission of optical signals to a remote location for processing or other utilization. Occasionally, it is necessary either to interconnect two fibers or to repair a fiber which has been broken. Satisfactory interconenction of optical fibers requires that the fiber ends be cut very precisely to a right angle, and the facing ends aligned and brought into very close proximity.

Techniques and devices utilised in the past for obtaining such interconnection have been complex, expensive and difficult to use, especially under field conditions and, therefore, have not been found to be completely satisfactory. Certain optical connectors have included high precision parts and, in some cases, epoxies or other adhesives were required to secure the fibers in place. Moreover, such known connectors necessitated laboratory style approach to assembly which also increased cost of the connectors and limited their use.

Still further, it is desirable that an optical fiber connector protect the fiber from breakage, retain the fiber against so-called "end-slip", as well as have the capability of being reused in the event of fiber damage while in the connector.

An excellent optical fiber connector is that disclosed in EP—A—0076053, published 6th April 1983. The embodiment described includes a fiber contact housing within which three parallel cylindrical pins are brought into peripheral surface contact with each other with a bare fiber end portion being received within the interstice between the pins. Additional means are provided for clamping onto the insulative covering of the fiber immediately adjacent to the stripped bare portion and thereby securing the pins and fiber into a unitary construction. The outermost ends of the three pins and contained fiber of two fibers to be connected extend within the connector for receipt internally of a hollow alignment sleeve where the two bare fibers are brought into alignment and in an abutting relation.

The alignment sleeve described consists of a sheet of spring metal having a plurality of spaced slots formed therein and which sheet has been formed into a hollow tube. Although this spring sleeve has many advantageous aspects it is not completely satisfactory for a number of reasons. First of all, where a spring metal sleeve is used, the metal will wear or degrade on repeated mating and unmating which results in undesirable deposit of particulate contamination on the optical fiber surfaces. Secondly, for best results an alignment means should provide resilient circumferential radial loading which is substantially uniform. Present indications are that a metal spring type of alignment sleeve of the type described in this patent can provide uneven or nonuniform exertion of forces onto the fibers and their pin holders. Thirdly, use of a metallic spring alignment means can result in a shift of axial alignment of the pair of coupled fibers due to the perturbing influence of the seams (i.e., spring slots) which may give one or both of fibers a preferential alignment.

Still further, manufacture of a metal spring alignment sleeve within the required tolerances is difficult and relatively costly. Also, assembly of a metallic spring sleeve within a necessary hood or containment housing is a relatively complicated procedure requiring special tools or fixtures.

The aim of the present invention is to improve further upon the proposals already made in EP—A—0076053.

According to the invention there is provided a connector for a pair of optical fibers each having a fiber element and a protective covering thereover, said pair of optical fibers each having an end portion bare of protective covering and the fiber end faced off to provide for optical communication between the fibers characterised by:

a contact for each of the optical fibers including,

three elongated members each having an elongated cylindrical portion and an end portion with securing means thereon, said members being so dimensioned as to enable their assembly about the fibers with the cylindrical portions arranged in mutual contacting relation and contacting the bare fiber element periphery and the securing means securing the fiber protective covering,

means for holding the three elongated members with their cylindrical portions extending outwardly of the said means; and

an alignment means for receiving the three elongated members assemblies from the pair of contacts and locating the outer ends of the two assemblies with the faced off ends of the fibers at a predetermined spacing with respect to one another,

the alignment means comprising a body of a semi-rigid resilient plastics material, said body including a straight bore whose inner surface is smooth and uniform to enable fitting and sliding receipt of the sets of three pins with included optical fiber therein regardless of the relative orientation of the set of pins.

In accordance with a first embodiment of the described invention, a hollow tubular body or bushing constructed of a material having sufficient rigidity (e.g., thermoplastic polyester) has a bore of circular cross-section sufficient to enable fitting receipt of first and second fibers, each arranged in a three-pin contact, from opposite ends of the tubular body. The outer peripheral surface of the tubular body has a plurality of elongated grooves formed therein extending from a major but not full length of the body with adjacent slots starting from opposite ends of the body. The grooves provide a substantial amount of resiliency transversely of the alignment body bore for embracing the two three-pin contacts exterior and exerting a substantially uniform radial pressure onto each of the contacts irrespective of the orientation of the contacts within the tubular body. Preferably, the tubular alignment body is molded to final form, or, optionally, it may be machined.

In an alternate embodiment of this invention, an elongated generally tubular body having an internal bore of dimensions enabling sliding receipt of a three-pin contact therein has its peripheral surface formed into a plurality of grooves extending completely throughout the body length. Each of the grooves has a major central portion of substantially uniform depth with both of the groove ends being shallower at each end thereof.

In the drawings:—

Figure 1 is a perspective view of a first form of an optical fibre contact alignment bushing.

Figure 2 is an end elevational view of the alignment bushing of Figure 1 shown with a three-pin optical fiber contact in place.

Figure 3 is a sectional view taken along the line 3—3 of Figure 2 showing the internal wall thereof laid out in flat form.

Figure 4 is a longitudinal sectional view of the alignment bushing in place in an optical fiber connector as more fully described and illustrated in EP—A—0076053, shown with a pair of fiber-optics contacts aligned therein taken along line 4—4 of Figure 2.

Figure 5 is a cross-sectional view taken along the line 5—5 of Figure 4.

Figure 6 is a perspective view of an alternate embodiment of this invention.

Figure 7 is an end elevational view of the alignment bushing of Figure 6 shown with a three-pin optical fiber contact included.

Figure 8 is a longitudinal sectional view showing the alignment bushing of Figure 6 in use taken along line 8—8 of Figure 7.

Figure 9 is a cross-sectional view taken along the line 9—9 of Figure 8.

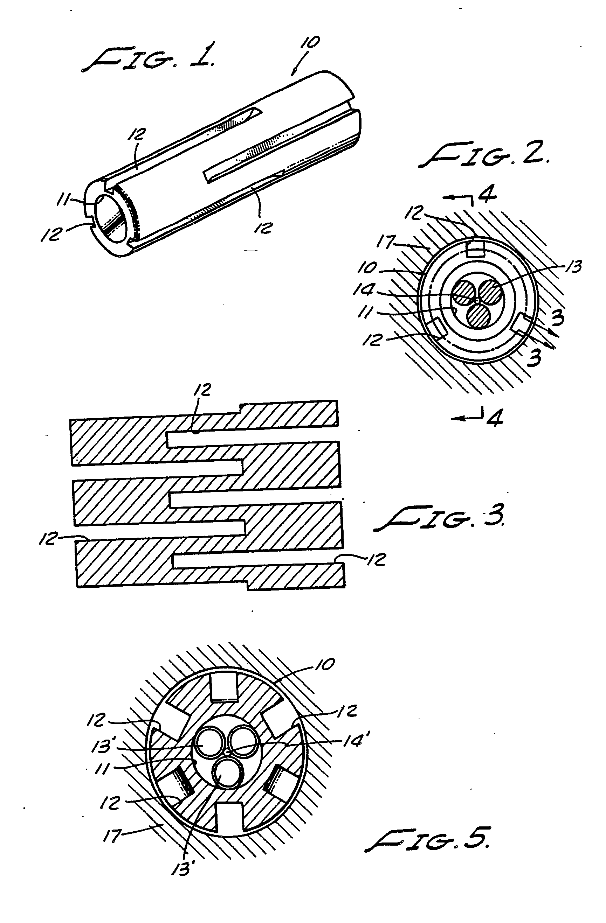

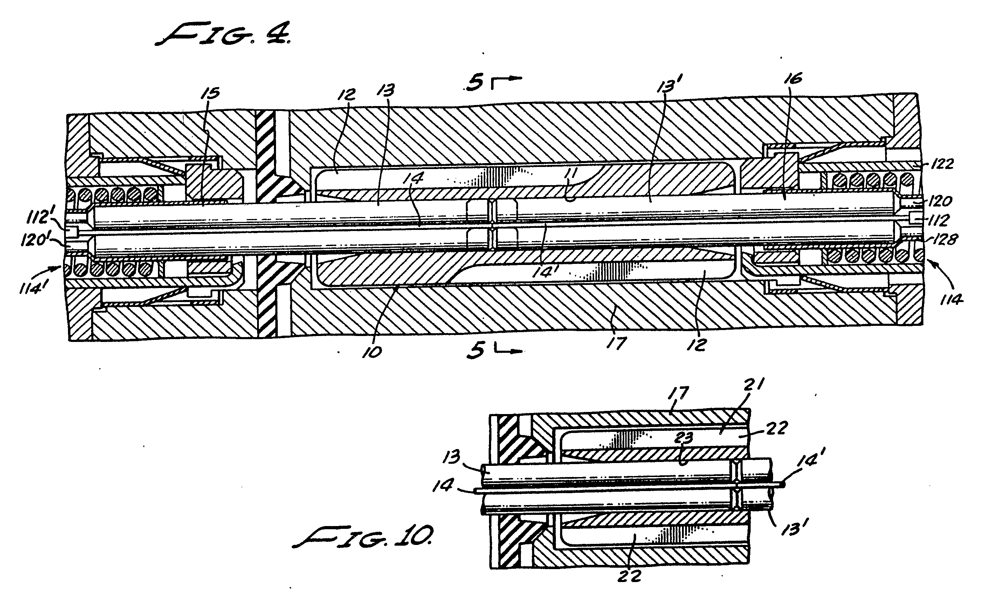

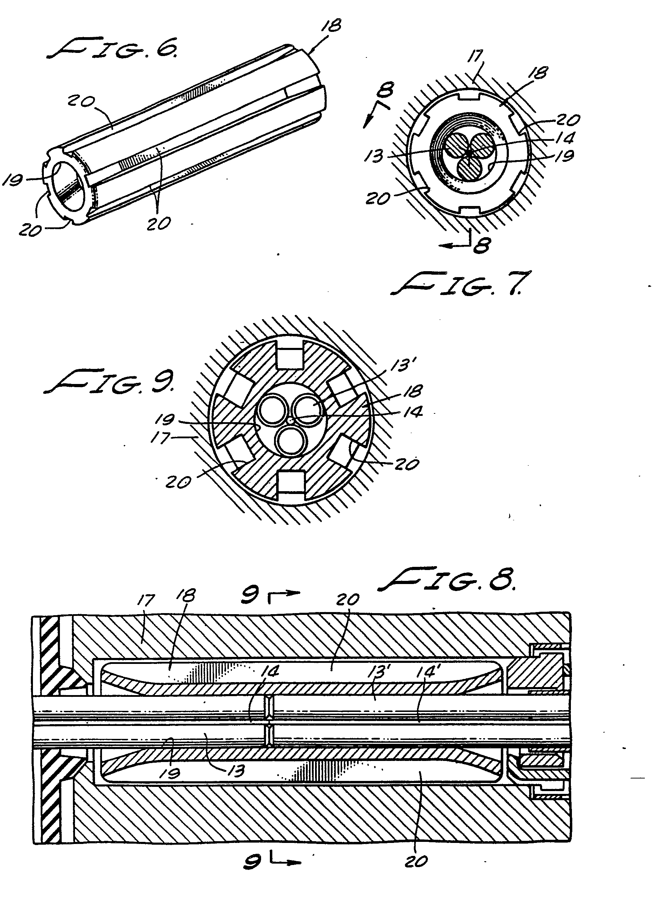

Turning first to Figure 4 of the drawings, there is shown the relevant part of a connector as further described and illustrated in EP—A—0076053. The connector comprises contacts 114, 114' for the respective glass fibers which each have a fiber element 14, 14' and a protective covering 112 thereover. The contact includes three elongated members each having an elongated cylindrical portion respectively 13, 13' and an end portion respectively 120, 120'. Although not shown in Figure 4 the end portions 120, 120' each have an enlargement with raised circular ridges for making contact with the fiber protective covering 112. As shown also in Figure 2 the elongated members form an assembly about the glass fiber with the cylindrical portions 13, 13' contacting the bare glass element periphery and the securing means securing the fiber protective covering. The contact housing 122 and an elongated hollow ferrule 128 constitute means for holding the three elongated members with their cylindrical portions arranged in mutual contacting relation and extending outwardly thereof. An alignment bushing 10 receives the three elongated members from the pair of contacts and locates the outer ends with the faced off ends of the fibers at a predetermined spacing.

In the present invention the alignment bushing 10 comprises a body of semi-rigid resilient plastics material, the body including a smooth-sided straight passage or bore 11 therethrough of such cross-sectional dimensions as to enable fitting and sliding receipt of the sets of three pins with included optical fiber therein.

The bushing may broadly be constituted by a plane hollow cylinder of appropriate material. However it is advantageous to form the bushing with generally uniformly circumferentially distributed parallel grooves e.g. as shown in Figures 1 or 6. This allows greater latitude in the outside diameter of the bushing and in particular it allows a relatively thick walled bushing to be utilized while still retaining a resilient compression fit which is circumferentially uniform. This means that the dimensions of the remainder of the connector do not require to be determined by the dimensions of the bushing with particular regard to the resiliency of the material available.

A plurality of longitudinally extending grooves 12 are formed in the peripheral surface of the bushing 10, the grooves being angularly spaced with respect to each other about the bushing circumference. More particularly, each of the grooves 12 extends from one end of the bushing to a point past the centerline of the bushing long dimension. Immediately adjacent grooves 12 start from the opposite end thereby providing an overlapping relationship of the inner ends of the grooves in the bushing central region. That is, in the bushing portions immediately adjacent each end the body wall is elastically relieved by three longitudinal grooves as shown in Figure 1, whereas in the central region of the body wall there are six grooves. By this construction, the flexibility of the bushing wall is greatest in the central region and least at the outer ends which has advantageous results that will be described herein.

Although other materials may be found satisfactory for this purpose, the best materials found to date for use in constructing a bushing 10 are polyphenyl sulphide sold under the Trade Mark Ryton (Phillips Petroleum) and thermoplastic polyester, sold under the Trade Mark Valox (General Electric). Also, most uniform results have been obtained by machining the grooves 12, although it is contemplated that the bushing 10 may be satisfactorily manufactured by molding to final form.

As has already been described, an optical fiber contact with which the bushing 10 is especially advantageous, has three (3) cylindrical pins 13 that include a bare fiber element 14 held in the interstice between their peripheral surfaces (Figures 2 and 5). The diameter of the bushing bore 11 is such that the pins and included fiber can be fittingly received therewithin and the bushing will exert a highly uniform radial force onto the pins and fiber. Since the bore walls are smooth and uniform, there is no variation in fiber alignment resulting from inserting the pins and fiber at different angular orientations.

Turning to Figure 4, first and second pin contacts 15 and 16 of the kind set forth in the referenced copending patent application have corresponding sets of three pins 13, 13' including fiber elements 14 and 14' respectively. The three-pin holders and fibers are located within the alignment bushing 10 with the fiber facing portions being very slightly spaced apart and precisely aligned with the longitudinal axis of bore 11. A protective housing 17 is shown enclosing the bushing 10.

For the ensuing description of an alternative embodiment, reference is made simultaneously to Figures 6—9. The alignment bushing 18 is an elongated tubular body having a uniform circular bore 19. A plurality of longitudinally grooves 20 which have a uniform depth throughout the major central portion of the bushing and an upwardly sloping floor or bottom closely adjacent each end of the bushing. In this way the central bushing walls are more resilient than the end portions. Installation of the three-pin fiber contacts is the same as described in regard to the first embodiment. Still further, as shown in Figure 8, the overall relation of a pair of fiber contacts to "interconnect" two fibers is highly similar to that of the first embodiment.

In using either version of the alignment bushing, it may be desirable to enclose it within a protective housing or hood 17 as shown in Figures 4 and 8. Such a housing may be constructed of rubber or synthetic plastic, for example, and serving to protect the bushing and included three-pin contact from possible physical damage and the ingress of moisture, dust and dirt.

The described bushing provides a means for locating a pair of three-pin contacts with included fibers in a precisely aligned relation. Such optical signals may be transmitted from one fiber to the other with a minimum of loss or signal diminution. The aligned relationship can be achieved by merely inserting the three-pin contacts into the bushing bore irrespective of the angular relationship of contacts and bushing. Since the bushing construction provides a highly uniform radial force onto the contacts throughout the full circumference of the bore wall this prevents misalignment that could result from uneven pressure on the contacts. Although the radial pressure at the outer end portions is greater than at the center of the bushing, there is a relatively large central area in both embodiments where the radially exerted force is highly constant.

## Claims

1. A connector for a pair of optical fibers each having a fiber element (14, 14') and a protective covering (112) thereover, said pair of optical fibers each having an end portion bare of protective covering and the fiber end faced off to provide for optical communication between the fibers characterised by:
a contact (114, 114') for each of the optical fibers including.
three elongated members each having an elongated cylindrical portion (13, 13') and an end portion (120, 120') with securing means thereon, said members being so dimensioned as to enable their assembly about the fiber with the cylindrical portions arranged in mutual contacting relation and contacting the bare fiber element periphery and the securing means securing the fiber protective covering,
means (122, 128) for holding the three elongated members with their cylindrical portions extending outwardly of the said means; and
an alignment means (10) for receiving the three elongated members assemblies from the pair of contacts and locating the outer ends of two assemblies with the faced off ends of the fibers at a predetermined spacing with respect to one another.
the alignment means comprising a body of a semi-rigid resilient plastics material, said body including a straight bore whose inner surface is smooth and uniform to enable fitting and sliding receipt of the sets of three pins with included optical fiber therein regardless of the relative orientation of the sets of pins.

2. A connector according to claim 1 wherein said body has portions (12, 20) removed from the peripheral surface providing resilient flexible wall surfaces thereunder, the removed portions being uniformly distributed around the passage.

3. A connector according to claim 2, in which the removed portions are grooves (12, 20) arranged generally parallel to each other and uniformly spaced about the body.

4. A connector according to claim 3, in which immediately adjacent grooves (12) begin at different ends of the body and extend only partway between the ends.

5. A connector according to claim 3, in which the grooves (20) extend from one end of the body to the other, with the grooves being shallower closely adjacent to each end.

6. A connector according to claim 2 or claim 3, in which the body passage is uniformly circular in cross-section and of such dimensions that body walls under the removed portions (12, 20) are distended when three pins and included fiber are received in the body passage.

7. A connector according to claim 6, in which the passage distension occurs only in the regions where body portions are removed.

## Patentansprüche

1. Steckverbindung für ein Paar optischer Fasern, von denen jede ein Faserelement (14, 14') und eine Schutzabdeckung (112) darüber aufweist, wobei das Paar von optischen Fasern jeweils einen von der Schutzabdeckung freien Endabschnitt aufweist und das Faserende für die optische Verbindung zwischen den Fasern planbearbeitet ist, gekennzeichnet, durch

einen Kontakt (114, 114') für jede der optischen Fasern,

mit drei langgestreckten Elementen, von denen jedes einen langgestreckten zylindrischen Abschnitt (13, 13') und einen Endabschnitt (120, 120') mit Befestigungseinrichtungen daran aufweist, wobei die Elemente so bemessen sind, daß ihre Anordnung um die Faser herum möglich ist, wobei die zylindrischen Abschnitte im wechselseitiger Kontaktbeziehung stehen und den blanken Faserelementumfang und die Befestigungseinrichtungen berühren, die die Faserschutzabdeckung festlegen,

mit Einrichtungen (122, 128) zum Halten der drei langgestreckten Elemente, wobei sich ihre zylindrischen Abschnitte aus diesen Einrichtungen heraus erstrecken,

und mit einer Fluchtungseinrichtung (10) für die Aufnahme der drei langgestreckten Elementanordnungen von dem Paar von Kontakten und für die Positionierung der Außenenden der beiden Anordnungen mit den planbearbeiteten Enden der Fasern in einem vorgegebenen Abstand zueinander,

wobei die Fluchtungseinrichtung einen Körper aus einem halbstarren elastischen Kunstoffmaterial aufweist, der eine gerade Bohrung hat, deren Innenfläche glatt und gleichförmig ist, um so eine Paß- und Gleitaufnahme des Satzes von drei Zapfen mit darin eingeschlossener optischer Faser unabhängig von der jeweiligen Ausrichtung des Satzes von Zapfen zu ermöglichen.

2. Steckverbindung nach Anspruch 1, bei welcher der Körper Abschnitte (12, 20) aufweist, die von der Umfangsoberfläche entfernt sind, wodurch sich elastische flexible Wandoberflächen darunter ergeben, wobei die entfernten Anschnitte gleichförmig um den Durchgang herum verteilt sind.

3. Steckverbindung nach Anspruch 2, bei welcher die entfernten Abschnitte Nuten (12, 20) sind, die insgesamt parallel zueinander und in gleichem Abstand um den Körper herum angeordnet sind.

4. Steckverbindung nach Anspruch 3, bei welcher unmittelbar benachbarte Nuten (12) an verschiedenen Enden des Körpers beginnen und sich nur über einen Teil zwischen den Enden erstrecken.

5. Steckverbindung nach Anspruch 3, bei welcher die Nuten (20) sich von einem Ende des Körpers zum Anderen erstrecken, wobei die Nuten nahe an jedem Ende flacher sind.

6. Steckverbindung nach Anspruch 2 oder Anspruch 3, bei welcher der Körperdurchgang gleichförmig kreisförmig im Querschnitt ist und solche Abmessungen hat, daß die Körperwände unter den entfernten Abschnitten (12, 20) geweitet sind, wenn drei Zapfen und eingeschlossene Faser in dem Körperdurchgang aufgenommen sind.

7. Steckverbindung nach Anspruch 6, bei welcher die Durchgangsaufweitung nur in den Bereichen auftritt, wo Körperabschnitte entfernt sind.

**Revendications**

1. Connecteur pour une paire de fibres optiques qui comprennent chacune une âme de fibre (14, 14') recouverte d'un revêtement protecteur (112), chacune des fibres de cette paire de fibres optiques ayant une partie terminale dénudée de son revêtement protecteur et l'extrémité de la fibre étant dressée pour établir la communication optique entre les fibres, caractérisé par:

un contact (114, 114') pour chacune des fibres optiques, qui comprend:

trois éléments allongés possédant chacun une partie cylindrique allongée (13, 13') et une partie terminale (120, 120') portant des moyens de fixation, lesdits éléments étant dimensionnés de manière à permettre de les assembler autour des fibres dans une position telle que les parties cylindriques soient disposées en contact mutuel et en contact avec la périphérie de l'âme de fibre nue et les moyens de fixation fixant le revêtement protecteur de la fibre; des moyens (122, 128) servant à tenir les trois éléments allongés de telle façon que leurs parties cylindriques débordent à l'extérieur desdits moyens; et

des moyens d'alignement (10) destinés à recevoir les ensembles de trois éléments allongés émergeant de la paire de contacts et plaçant les extrémités extérieurs des deux ensembles dans une position telle que les extrémités dressées des fibres sont à un espacement prédéterminé l'une de l'autre;

les moyens d'alignement comprenant un corps en matière plastique élastique semi-rigide, ledit corps comprenant un alésage rectiligne dont la surface interne est lisse et uniforme pour pouvoir recevoir avec ajustement et à coulissement les jeux de trois tiges avec la fibre optique incluse dans ce jeu, quelle que soit l'orientation relative des jeux de tiges.

2. Connecteur selon la revendication 1, dans lequel des parties (12, 20) sont enlevées sur la surface périphérique dudit corps, pour donner naissance à des surfaces de parois flexibles et élastiques au-dessous, les parties enlevées étant uniformément réparties autour du passage.

3. Connecteur selon la revendication 2, dans lequel les parties enlevées sont des rainures (12, 20) disposées à peu près parallèlement entre elles et uniformément espacées autour du corps.

4. Connecteur selon la revendication 3, dans lequel les rainures (12) immédiatement adjacentes commencent à différentes extrémités du corps et ne s'étendent que sur une partie de la distance entre les extrémités.

5. Connecteur selon la revendication 3, dans lequel les rainures (20) s'étendent d'une extrémité du corps à l'autre, les rainures étant moins profondes dans des positions étroitement adjacentes aux deux extrémités.

6. Connecteur selon la revendication 2 ou la revendication 3, dans lequel le passage du corps est uniformément circulaire en section transversale et de dimensions telles que les parois du corps situées sous les parties (12, 20) qui sont enlevées soient distendues lorsque les trois tiges et la fibre enfermée entre ces tiges sont reçues dans le passage du corps.

7. Connecteur selon la revendication 6, dans lequel la distension du passage ne se produit que dans les régions où les parties du corps sont enlevées.

FIG. 1.

FIG. 2.

FIG. 3.

FIG. 5.

0 104 820

FIG. 4.

FIG. 10.

2

FIG.6.

FIG.7.

FIG.9.

FIG.8.